# EUROPÄISCHE PATENTSCHRIFT

(11) **EP 1 501 362 B1**
(45) Veröffentlichungstag und Bekanntmachung des Hinweises auf die Patenterteilung: **25.11.2009**
(21) Anmeldenummer: 03722494.6
(22) Anmeldetag: 16.04.2003
(51) Int. Cl.: A01N 59/02, A01N 25/12

(54) **VERFAHREN ZUR CHEMISCHEN BODENENTSEUCHUNG DURCH APPLIKATION EINER MISCHUNG AUS SCHWEFEL UND KOMPLEXBILDNER**
METHOD FOR CHEMICALLY DECONTAMINATING SOIL BY APPLYING A MIXTURE OF SULPHUR AND COMPLEXING AGENTS
PROCEDE DE DESINFECTION CHIMIQUE DE SOL PAR APPLICATION D'UN MELANGE DE SOUFRE ET D'UN AGENT COMPLEXANT

(30) Priorität: 23.04.2002 DE 10218162
(43) Veröffentlichungstag der Anmeldung: 02.02.2005
(73) Patentinhaber: BASF SE, 67056 Ludwigshafen (DE)
(72) Erfinder: TIDOW, Jörn, 68723 Schwetzingen (DE); SCHOLZ, Herbert, 67434 Neustadt (DE); PARG, Adolf, 67098 Bad Dürkheim (DE); STADLER, Reinhold, 67489 Kirrweiler (DE); SCHNEIDER, Karl-Heinrich, 67271 Kleinkarlbach (DE); HÄHNDEL, Reinhardt, 67117 Limburgerhof (DE); POMPEJUS, Gerhard, 67435 Neustadt (DE); RIERA FORCADES, Francesc, 08035 Barcelona (ES)
(86) Internationale Anmeldenummer: PCT/EP2003/003972
(87) Internationale Veröffentlichungsnummer: WO 2003/090541

(56) Entgegenhaltungen:
- EP-A- 0 220 655
- WO-A-01/87069
- DE-A- 2 604 695
- FR-A- 2 599 592
- US-A- 2 957 798
- DATABASE BIOSIS [Online] BIOSCIENCES INFORMATION SERVICE, PHILADELPHIA, PA, US; 1993 POWELL N L: "Spray-tank-mix compatibility of manganese, boron, and fungicide: Solution pH and precipitation." Database accession no. PREV199396119175 XP002245373 & PEANUT SCIENCE, Bd. 20, Nr. 1, 1993, Seiten 44-49, ISSN: 0095-3679

## Beschreibung

Die vorliegende Erfindung betrifft Verfahren zur chemischen Bodenentseuchung durch Applikation einer fungizid, insektizid oder nematizid wirksamen Menge einer Mischung M, enthaltend eine Komponente a) aus a1) 20 bis 96 Gew.-% Schwefel, a2) 4 bis 80 Gew.-% eines Komplexbildners Ligninsulfonate, Naphthalinsulfonsäure- Formaldehydkondensate, Polyacrylsäure und ihre Salze, Polymethacrylsäure und ihre Saize, Polymaleinsäure und deren Salze, Copolymere aus Acrylsäure und Maleinsäure, Polyacrylate, Polyaspartate und andere Polyaminosäuren, und gegebenenfalls ein oder mehrere Pflanzenschutzmittel b) und/oder weitere Zusatzstoffe c) sowie die Verwendung einer Mischung M als Mittel zur chemischen Bodenentseuchung.

Mischungen aus elementarem Schwefel mit diversen Hilfsmitteln sind im Agrobereich als Fungizide bzw. Akarizide bekannt und beispielsweise als Produkt KUMULUS ® der BASF Aktiengesellschaft im Handel. Die zu behandelnden Pflanzen werden im allgemeinen mit den elementaren Schwefel enthaltenden Mitteln benetzt, beispielsweise durch direktes Bestäuben der Pflanzen.

Das Dokument WO 01/87 069 offenbart die Verwendung von mit Stärke ummmantelten Schwefel Verbindungen zur chemischen Bodenentseuchung. Stärke wird als Nahrungsmittel für Stärke-abbauenden Mikroorganismen eingesetzt, welche die mit Stärke ummantelten Körnern einer Schwefelverbindung öffnen. Die entseuchende Wirkung tritt erst nach 24 Stunden auf.

Der Einsatz von Mischungen aus elementarem Schwefel und Komplexbildner zur chemischen Bodenentseuchung ist hingegen nicht bekannt. Für diesen Zweck wurden bisher toxisch und ökologisch nicht unbedenkliche Chemikalien verwendet, deren Anwendung in den letzten Jahren stark eingeschränkt wurde (Rudolf Heitefuss, "Pflanzenschutz", 3. Auflage, Georg Thieme Verlag Stuttgart, New York, 2000, Seiten 227 bis 229).

Zur Bewässerung von Pflanzenkulturen, zum Beispiel Nutz- und/oder Zierpflanzen, wird verbreitet die sogenannte Tropfbewässerung angewendet. Hierbei sprühen Düsen, die via Pipeline aus einem Tank versorgt werden, die Nähr- und/oder Pflanzenschutzwirkstoffe, im allgemeinen in wässriger Lösung, Dispersion bzw. Suspension, in die Nähe der Wurzeln der Pflanzen. Die Nähr- und/oder Pflanzenschutzwirkstoffe werden vorteilhaft in einem Vorratstank vorgemischt, der die Pipeline, bzw. Spritzdüsen speist. Die Blätter der Kulturpflanzen kommen bei diesem Verfahren mit der Lösung der Nähr- und/oder Pflanzenschutzwirkstoffe nicht in Kontakt.

Der vorliegenden Erfindung lag daher die Aufgabe zugrunde ein Verfahren oder ein Erzeugnis zu entwickeln, welches eine chemische Bodenentseuchung erzielt, wobei das einzusetzende Mittel jedoch toxikologisch und ökologisch weitgehend unbedenklich ist und welches sich gut handhaben läßt.

Demgemäß wurde ein Verfahren zur chemischen Bodenentseuchung durch Applikation einer fungizid, insektizid oder nematizid wirksamen Menge einer Mischung M, enthaltend eine Komponente a) aus a1) 20 bis 96 Gew.-% Schwefel, a2) 4 bis 80 Gew.-% eines Komplexbildners Ligninsulfonate, Naphthalinsulfonsäure- Formaldehydkondensate, Polyacrylsäure und ihre Salze, Polymethacrylsäure und ihre Saize, Polymaleinsäure und deren Salze, Copolymere aus Acrylsäure und Maleinsäure, Polyacrylate, Polyaspartate und andere Polyaminosäuren, und gegebenenfalls ein oder mehrere Pflanzenschutzmittel b) und/oder weitere Komponenten c) sowie die Verwendung einer Mischung M als Mittel zur Bodenentseuchung gefunden.

Die Natur des in der erfindungsgemäßen Mischung enthaltenen Schwefels ist nicht kritisch. Es kann jeglicher elementare Schwefel verwendet werden, der lang bekannt ist, ausgiebig beschrieben wurde und als kommerzielles Produkt gehandelt wird. Gut geeignet ist beispielweise der aus Erdgasreinigungsanlagen erhältliche Schwefel.

Die Menge des Schwefels a1) in der erfindungsgemäßen Komponente a) liegt im Bereich von 20 bis 96 Gew-%, vorzugsweise 70 bis 95 Gew.-% und insbesondere 75 bis 85 Gew.-%, jeweils bezogen auf das Gesamtgewicht der Komponente a).

Als Komplexbildner a2) kommen polymere Komplexbildnerverbindungen in Frage. Der Komplexbildner a2) kann sowohl die reinen Komplexbildnerverbindungen als auch jegliche Mischungen der reinen Komplexbildnerverbindungen enthalten, wobei das Mischungsverhältnis nicht kritisch ist.

Als polymere Komplexbildnerverbindungen a2) verwendet Ligninsulfonate; Naphthalinsulfonsäure-Formaldehydkondensate, Polyacrylsäure und ihre Salze, insbesondere Na-Salze; Polymethacrylsäure und ihre Salze, insbesondere Na-Salze; Polymaleinsäure oder deren Salze, hergestellt z.B. durch Verseifung von Polymaleinsäureanhydrid, insbesondere Na-Salze; Copolymere aus Acrylsäure und Maleinsäure, insbesondere Na-Salze; Polyacrylate; Polyaspartate und andere Polyaminosäuren. Insbesondere werden als polymere Komplexbildnerverbindungen verwendet Ligninsulfonate und/oder Naphthalinsulfonsäure-Formaldehydkondensate.

Ligninsulfonate sind bekannt und werden beispielsweise in Römpp Chemilexikon, 9. Auflage, Band 3, Georg-Thieme Verlag, Stuttgart, New York 1990, Seite 2511 definiert. Gut geeignete Ligninsulfonate sind die Alkali- und/oder Erdalkalisalze und/oder Ammoniumsalze, beispielsweise die Ammonium-, Natrium-, Kalium-, Calcium- oder Magnesiumsalze der Ligninsulfonsäure. Bevorzugt werden die Natrium-, Kalium- oder Calciumsalze verwendet, ganz besonders bevorzugt die Natrium-, Kalium- und/oder Calciumsalze.

Selbstverständlich umfaßt der Begriff Ligninsulfonate auch Mischsalze verschiedener Ionen, wie Kalium-/Natriumligninsulfonat, Kalium-/Calciumligninsulfonat oder ähnliche, insbesondere Natrium-/Calciumligninsulfonat.

Naphthalinsulfonsäure-Formaldehydkondensate sind ebenfalls bekannt und beispielsweise als Tamol®-Produkte der BASF Aktiengesellschaft im Handel.

Die Menge des Kationenkomplexbildners a2) in der erfindungsgemäßen Komponente a) liegt im Bereich von 4 bis 80 Gew-%, vorzugsweise 5 bis 30Gew.-% und insbesondere 15 bis 25 Gew.-%, jeweils bezogen auf das Gesamtgewicht der Komponente a).

Wird eine Mischung aus Ligninsulfonat und Naphthalinsulfonsäure-Formaldehydkondensat als Komponente a2) verwendet, so liegt der Anteil des Ligninsulfonats in dieser Mischung üblicherweise im Bereich von 10 bis 90 Gew.-% und der Anteil des Naphthalinsulfonsäure-Formaldehydkondensat in dieser Mischung komplementär im Bereich von 90 bis 10 Gew.-%.

Besonders gut geeignete erfindungsgemäße Komponenten a) sind solche aus 75 bis 85 Gew.-% Schwefel und 15 bis 25 Gew.-% Ligninsulfonat.

Beispiele für erfindungsgemäße Komponenten a) sind: 95 Gew.-% Schwefel + 5 Gew.-% Natriumligninsulfonat; 90 Gew.-% Schwefel + 10 Gew.-% Natriumligninsulfonat; 80 Gew.-% Schwefel + 20 Gew.-% Natriumligninsulfonat; 75 Gew.-% Schwefel + 25 Gew.-% Natriumligninsulfonat; 75 Gew.-% Schwefel + 25 Gew.-% Kaliumligninsulfonat, 95 Gew.-% Schwefel + 5 Gew.-% Kaliumligninsulfonat; 90 Gew.-% Schwefel + 10 Gew.-% Kaliumligninsulfonat; 80 Gew.-% Schwefel + 20 Gew.-% Kaliumligninsulfonat; : 95 Gew.-% Schwefel + 5 Gew.-% Calciumligninsulfonat; 90 Gew.-% Schwefel + 10 Gew.-% Calciumligninsulfonat; 80 Gew.-% Schwefel + 20 Gew.-% Calciumligninsulfonat.

Die Herstellung der erfindungsgemäßen Mischung M, bzw. der Komponente a) kann durch Mischen, Zerkleinern, Trocken, beispielsweise Sprühtrocknen, erfolgen.

In der Regel liegt die erfindungsgemäße Mischung M bzw. die Komponente a) rieselfähig in granulären Partikeln mit einer mittleren Teilchengröße - bestimmt mit der Siebanalysenmethode nach CIPAC MT 170 (CIPAC Handbook F - Page 420 - Dry Sieve Analysis of Waterdispersible Granules) im Bereich von 50 µm bis 4 mm, vorzugsweise im Bereich von 100 µm bis 2 mm vor, deren Primärteilchen in der Regel 0,05 bis 8 µm groß sind (bestimmt mit der Methode ISO 13320-1: 1999 (Particle Size Analysis - Laser Diffraction Methods).

Die erfindungsgemäße Mischung M kann außer der Komponente a) noch ein oder mehrerer Pflanzenschutzmittel b) und /oder weitere Bestandteile c) enthalten.

Als Pflanzenschutzmittel b) kommen in Frage Herbizide, Pestizide und Fungizide. Unter Pestiziden versteht man unter anderem Akarizide, Insektizide und Nematizide.

Bevorzugte Herbizide, Fungizide, Akarizide, Insektizide und Nematizide werden in http://www.hclrss.demon.co.uk/index_cn_frame.html (Index of common names) offenbart. Eine Liste von bevorzugten Herbiziden, Fungiziden, Akariziden, Insektiziden und Nematiziden wird im folgenden offenbart, wobei einige der Wirkstoffe mehrmals, mit unterschiedlichen "Common Names", genannt werden: Abamectin; acephate; acequinocyl; acetamiprid; acethion; acetochlor; acetoprole; acifluorfen; aclonifen; ACN; acrinathrin; acrolein; acrylonitrile; acypetacs; alachlor; alanap; alanycarb aldicarb; aldimorph; aldoxycarb; aldrin; allethrin; d-trans-allethrin; allidochlor; allosamidin; alloxydim; allyl alcohol; allyxycarb; alorac; alpha-cypermethrin; ametridione; ametryn; ametryne; amibuzin; amicarbazone; amidithion; amidoflumet; amidosulfuron; aminocarb; aminotriazole; amiprofos-methyl; amiton; amitraz; amitrole; ammonium sulfamate; ampropylfos; AMS; anabasine; anilazine; anilofos; anisuron; arprocarb; arsenous oxide; asulam; athidathion; atraton; atrazine; aureofungin; avermectin B1; azaconazole; azadirachtin; azafenidin; azamethiphos; azidithion; azimsulfuron; azinphos-ethyl (= azinphosethyl); azinphos-methyl (= azinphosmethyl); aziprotryn (= aziprotryne); azithiram; azobenzene; azocyclotin; azothoate; azoxystrobin; barban (= barbanate); barium hexafluorosilicate; barium polysulfide; barium silicofluoride; barthrin; BCPC; beflubutamid; benalaxyl; benazolin; bendiocarb; bendioxide; benefin (= benfluralin); benfuracarb; benfuresate; benodanil; benomyl; benoxafos; benquinox; bensulfuron; bensulide; bensultap; bentaluron; bentazon (= bentazone); benthiocarb; benzadox; benzalkonium chloride; benzamacril; benzamizole; benzamorf; benzene hexachloride; benzfendizone; benzipram; benzobicyclon; benzoepin; benzofenap; benzofluor; benzohydroxamic acid; benzomate benzoximate (= benzoylprop); benzthiazuron; benzyl benzoate; beta-cyfluthrin; beta-cypermethrin; bethoxazin; BHC; gamma-BHC; bialaphos; bifenazate; bifenox; bifenthrin; bilanafos; binapacryl; bioallethrin; bioethanomethrin; biopermethrin; bioresmethrin; biphenyl; bispyribac; bistrifluron; bitertanol; bithionol; blasticidin-S; borax; Bordeaux mixture; BPPS; bromacil; bromchlophos; bromfenvinfos; bromobonil; bromobutide; bromocyclen; bromo-DDT; bromofenoxim; bromomethane; bromophos; bromophos-ethyl; bromopropylate; bromoxynil; brompyrazon; bromuconazole; BRP; bufencarb; bupirimate; buprofezin; Burgundy mixture; butacarb; butachlor; butafenacil; butam; butamifos; butathiofos; butenachlor; buthidazole; buthiobate; buthiuron; butocarboxim; butonate; butoxycarboxim; butralin; butroxydim; buturon; butylamine; butylate; butylchlorophos; cacodylic acid; cadusafos; cafenstrole; calcium arsenate; calcium chlorate; calcium cyanamide; calcium polysulfide; cambendichlor; camphechlor; captafol; captan; carbam; carbamorph; carbanolate; carbaryl; carbasulam; carbathion; carbendazim; carbetamide; carbofuran; carbon disulfide; carbon tetrachloride; carbophenothion; carbophos; carbosulfan; carboxazole; carboxin; carfentrazone; carpropamid; cartap; carvone; CDAA; CDEA; CDEC; CEPC; cerenox; cevadilla; Cheshunt mixture; chinalphos; chinalphos-méthyl; chinomethionat; chlobenthiazone; chlomethoxyfen; chlor-IPC; chloramben; chloraniformethan; chloranil; chloranocryl; chlorazifop; chlorazine; chlorbenside; chlorbicyclen; chlorbromuron; chlorbufam; chlordane; chlordecone; chlordimeform; chlorethoxyfos; chloreturon; chlorfenac; chlorfenapyr; chlorfenazole; chlorfenethol; chlorfenidim; chlorfénizon; chlorfenprop; chlorfenson; chlorfensulphide; chlorfenvinphos; chlorfenvinphos-methyl; chlorfluazuron; chlorflurazole; chlorflurecol; chlorflurenol; chloridazon; chlorimuron; chlorinate; chlormephos; chlormethoxynil; chlornitrofen; chloroacetic acid; chlorobenzilate; chloroform; chloromebuform; chloromethiuron; chloroneb; chlorophos; chloropicrin; chloropon; chloropropylate; chlorothalonil; chlorotoluron; chloroxifenidim (= chloroxuron); chloroxynil; chlorphoxim; chlorprazophos; chlorprocarb; chlorpropham; chlorpyrifos; chlorpyrifos-methyl; chlorquinox; chlorsulfuron; chlorthal; chlorthiamid; chlorthiophos; chlortoluron; chlozolinate; chromafenozide; cinerin I; cinerin II; cinidonethyl, cinmethylin; cinosulfuron; cisanilide; cismethrin; clethodim; climbazole; cliodinate; clodinafop; cloethocarb; clofentezine; clofop; clomazone; clomeprop; cloprop; cloproxydim; clopyralid; cloransulam; closantel; clothianidin; clotrimazole; CMA; CMMP; CMP; CMU; copper acetate; copper acetoarsenite; copper arsenate; copper carbonate, basic; copper hydroxide; copper naphthenate; copper oleate; copper oxychloride; copper 8-quinolinolate; copper silicate; copper sulfate; copper sulfate, basic; copper zinc chromate; coumaphos; coumithoate; 4-CPA; 4-CPB; CPMF; 4-CPP; CPPC; cresol (= cresylic acid); crotamiton; crotoxyfos (= crotoxyphos); crufomate; cryolite; cufraneb; cumyluron; cuprobam; cuprous oxide; CVMP; cyanatryn; cyanazine; cyanofenphos; cyanophos; cyanthoate; cyazofamid; cyclafuramid; cyclethrin; cycloate; cycloheximide; cycloprothrin; cyclosulfamuron; cycloxydim; cyflufenamid; cycluron; cyfluthrin; beta-cyfluthrin; cyhalofop; cyhalothrin; gamma-cyhalothrin; lambda-cyhalothrin; cyhexatin; cymoxanil; cypendazole; cypermethrin; alpha-cypermethrin; beta-cypermethrin; theta-cypermethrin; zeta-cypermethrin; cyperquat; cyphenothrin; cyprazine; cyprazole; cyprex; cyproconazole; cyprodinil; cyprofuram; cypromid; cyromazine; cythioate; 2,4-D; 3,4-DA; daimuron; dalapon; dazomet; 2,4-DB; 3,4-DB; DBCP; DCB; DCIP; DCPA (USA); DCPA (Japan); DCU; DDD; DDPP; DDT; pp (pure)-DDT; DDVP; 2,4-DEB; debacarb; decafentin; decarbofuran; dehydroacetic acid; deiquat; delachlor; delnav; deltamethrin; demephion; demephion-O; demephion-S; demeton; demeton-methyl; demeton-O; demeton-O-methyl; demeton-S; demeton-S-methyl; demeton-S-methylsulphon (= demeton-S-methyl sulphone); DEP; 2,4-DEP; depalléthrine; derris; 2,4-DES; desmedipham; desmetryn (= desmetryne); diafenthiuron; dialifor (= dialifos); di-allate (= diallate); diamidafos; dianat; diazinon; dibrom; 1,2-dibromoethane; dicamba; dicapthon; dichlobenil; dichlofenthion; dichlofluanid; dichlone; dichloralurea; dichlorfenidim; dichlormate; o-dichlorobenzene (= ortho-dichlorobenzene); p-dichlorobenzene (= para-dichlorobenzene); 1,2-dichloroethane; dichloromethane; dichlorophen; 1,2-dichloropropane; 1,3-dichloropropene; dichlorprop; dichlorprop-P; dichlorvos; dichlozoline; diclobutrazol; diclocymet; diclofop; diclomezine; dicloran; diclosulam; dicofol; dicresyl; dicrotophos; dicryl; dicyclanil; dieldrin; dienochlor; diethamquat; diethatyl; diethion (= diéthion); diethofencarb; diethyl pyrocarbonate; difenoconazole; difenopenten; difenoxuron; difenzoquat; diflubenzuron; diflufenican (= diflufenicanil); diflufenzopyr; diflumetorim; dilor; dimefox; dimefuron; dimehypo; dimepiperate; dimetan; dimethachlor; dimethametryn; dimethenamid; dimethenamid-P; dimethirimol; dimethoate; dimethomorph; dimethrin; dimethylvinphos; dimetilan; dimexano; dimidazon; dimoxystrobin; dimpylate; dinex; diniconazole; diniconazole-M; dinitramine; dinobuton; dinocap; dinocap-4; dinocap-6; dinocton; dinofenate; dinopenton; dinoprop; dinosam; dinoseb; dinosulfon; dinotefuran; dinoterb; dinoterbon; diofenolan; dioxabenzofos; dioxacarb; dioxathion; diphenamid; diphenyl sulfone; diphenylamine; diphenylsulphide; dipropetryn; dipterex; dipyrithione; diquat; disugran; disul; disulfiram; disulfoton; ditalimfos; dithianon; dithicrofos; dithiométon; dithiopyr; diuron; dixanthogen; DMPA; DNOC; dodemorph; dodicin; dodine; dofenapyn; doguadine; doramectin (= 2,4-DP); 3,4-DP; DPC; drazoxolon; DSMA; d-trans-allethrin; dymron; EBEP; ecdysone; ecdysterone; echlomezol; EDB; EDC; EDDP (= edifenphos); eglinazine; emamectin; EMPC; empenthrin; endosulfan; endothal (= endothall); endothion; endrin; ephirsulfonate; EPN; epofenonane; epoxiconazole; eprinomectin; epronaz; EPTC; erbon; esfenvalerate; ESP; esprocarb; etaconazole; etaphos; etem; ethaboxam; ethalfluralin; ethametsulfuron; ethidimuron; ethiofencarb; ethiolate; ethion; ethiprole; ethirimol; ethoate-methyl; ethofumesate; ethoprop (= ethoprophos); ethoxyfen; ethoxyquin; ethoxysulfuron; ethyl pyrophosphate; ethylan (= ethyl-DDD); ethylene dibromide; ethylene dichloride; ethylene oxide; ethyl formate; ethylmercury acetate; ethylmercury bromide; ethylmercury chloride; ethylmercury phosphate; etinofen; ETM; etnipromid; etobenzanid; etofenprox; etoxazole; etridiazole; etrimfos; EXD; famoxadone; famphur; fenac; fenamidone; fenaminosulf; fenamiphos; fenapanil; fenarimol; fenasulam; fenazaflor; fenazaquin; fenbuconazole; fenbutatin oxide; fenchlorphos; fenethacarb; fenfluthrin; fenfuram; fenhexamid; fenidin; fenitropan; fenitrothion; fénizon; fenobucarb; fenolovo; fenoprop; fenothiocarb; fenoxacrim; fenoxanil; fenoxaprop; fenoxaprop-P; fenoxycarb; fenpiclonil; fenpirithrin; fenpropathrin; fenpropidin; fenpropimorph; fenpyroximate; fenridazon; fenson; fensulfothion; fenteracol; fenthiaprop; fenthion; fenthion-ethyl; fentiaprop; fentin; fentrazamide; fentrifanil; fenuron; fenvalerate; ferbam; ferimzone; ferrous sulfate; fipronil; flamprop; flamprop-M; flazasulfuron; flonicamid; florasulam; fluacrypyrim; fluazifop; fluazifop-P; fluazinam; fluazolate; fluazuron; flubenzimine; flucarbazone; fluchloralin; flucofuron; flucycloxuron; flucythrinate; fludioxonil; fluenetil; flufenacet; flufenerim; flufenican; flufenoxuron; flufenprox; flufenpyr; flumethrin; flumetover; flumetsulam; flumezin; flumiclorac; flumioxazin; flumipropyn; fluometuron; fluorbenside; fluoridamid; fluorochloridone; fluorodifen; fluoroglycofen; fluoroimide; fluoromidine; fluoronitrofen; fluothiuron; fluotrimazole; flupoxam; flupropacil; flupropanate; flupyrsulfuron; fluquinconazole; fluridone; flurochloridone; fluromidine; fluroxypyr; flurtamone; flusilazole; flusulfamide; fluthiacet; flutolanil; flutriafol; fluvalinate; tau-fluvalinate; folpel (= folpet); fomesafen; fonofos; foramsulfuron; formaldehyde; formetanate; formothion; formparanate; fosamine; fosetyl; fosmethilan; fospirate; fosthiazate; fosthietan; fthalide; fuberidazole; furalaxyl; furametpyr; furathiocarb; furcarbanil; furconazole; furconazole-cis; furethrin; furmecyclox; furophanate; furyloxyfen; gamma-BHC; gamma-cyhalothrin; gamma-HCH; glufosinate; glyodin; glyphosate; griseofulvin; guanoctine (= guazatine); halacrinate; halfenprox; halofenozide; halosafen; halosulfuron; haloxydine; haloxyfop; HCA; HCH; gamma-HCH; HEOD; heptachlor; heptenophos; heterophos; hexachlor (= hexachloran); hexachloroacetone; hexachlorobenzene; hexachlorobutadiene; hexaconazole; hexaflumuron; hexafluoramin; hexaflurate; hexazinone; hexylthiofos; hexythiazox; HHDN; hydramethylnon; hydrogen; cyanide; hydroprene; hydroxyisoxazole; 8-hydroxyquinoline; sulfate; hymexazol; hyquincarb; IBP; imazalil; imazamethabenz; imazamox; imazapic; imazapyr; imazaquin; imazethapyr; imazosulfuron; imibenconazole; imidacloprid; iminoctadine; imiprothrin; indanofan; indoxacarb; iodobonil; iodofenphos; iodosulfuron; ioxynil; ipazine; IPC; ipconazole; iprobenfos; iprodione; iprovalicarb; iprymidam; IPSP; IPX; isamidofos; isazofos; isobenzan; isocarbamid; isocil; isodrin; isofenphos; isomethiozin; isonoruron; isopolinate; isoprocarb; isoprocil; isopropalin; isoprothiolane; isoproturon; isothioate; isouron; isovaledione; isoxaben; isoxachlortole; isoxaflutole; isoxapyrifop; isoxathion; isuron; ivermectin; jasmolin I; jasmolin II; jodfenphos; juvenile; hormone I; juvenile; hormone II; juvenile; hormone III; karbutilate; kasugamycin; kelevan; kinoprene; kresoxim-methyl; lactofen; lambda-cyhalothrin; lead arsenate; lenacil; leptophos; lime sulfur; d-limonene; lindane; linuron; lirimfos; lufenuron; lythidathion; M-74; M-81; MAA; malathion; maldison; malonoben; MAMA; mancopper; mancozeb; maneb; mazidox; MCC; MCPA; MCPA-thioethyl; MCPB; 2,4-MCPB; mebenil; mecarbam; mecarbinzid; mecarphon; mecoprop; mecoprop-P; medinoterb; mefenacet; mefluidide; menazon; MEP; mepanipyrim; mephosfolan; mepronil; mercaptodimethur; mercaptophos; mercaptophos-teolovy; mercaptothion; mercuric; chloride; mercuric oxide; mercurous; chloride; mesoprazine; mesosulfuron; mesotrione; mesulfen; mesulfenfos; mesulphen; metalaxyl; metalaxyl-M; metam; metamitron; metaphos; metaxon; metazachlor; metazoxolon; metconazole; metflurazon; methabenzthiazuron; methacrifos; methalpropalin; metham; methamidophos; methasulfocarb; methazole; methfuroxam; methibenzuron; methidathion; methiobencarb; methiocarb; methiuron; methocrotophos; metholcarb; methometon; methomyl; methoprene; methoprotryn; methoprotryne; methoxychlor; 2-methoxyethylmercury; chloride; methoxyfenozide; methyl bromide; methylchloroform; methyldithiocarbamic; acid; methyldymron; methylene; chloride; methyl; isothiocyanate; methyl-mercaptophos; methylmercaptophos; oxide; methyl-mercaptophos-teolovy; methylmercury; benzoate; methylmercury; dicyandiamide; methyl parathion; methyltriazothion; metiram; metobenzuron; metobromuron; metolachlor; S-metolachlor; metolcarb; metominostrobin; metosulam; metoxadiazone; metoxuron; metrafenone; metribuzin; metriphonate; metsulfovax; metsulfuron; mevinphos; mexacarbate; milbemectin; milneb; mipafox; MIPC; mirex; MNAF; molinate; monalide; monisouron; monochloroacetic; acid; monocrotophos; monolinuron; monosulfiram; monuron; morfamquat; morphothion; MPMC; MSMA; MTMC; myclobutanil; myclozolin; nabam; naftalofos; naled; naphthalene; naphthalic; anhydride; naphthalophos; naproanilide; napropamide; naptalam; natamycin; neburea; neburon; nendrin; nichlorfos; niclofen; niclosamide; nicobifen; nicosulfuron; nicotine; nifluridide; nikkomycins; NIP; nipyraclofen; nitenpyram; nithiazine; nitralin; nitrapyrin; nitrilacarb; nitrofen; nitrofluorfen; nitrostyrene; nitrothal-isopropyl; nobormide; norbormide; norea; norflurazon; noruron; novaluron; noviflumuron; NPA; nuarimol; OCH; octhilinone; o-dichlorobenzene; ofurace; omethoate; orbencarb; orthobencarb; ortho-dichlorobenzene; oryzalin; ovatron; ovex; oxadiargyl; oxadiazon; oxadixyl; oxamyl; oxapyrazon; oxasulfuron; oxaziclomefone; oxine-copper; oxine-Cu; oxpoconazole; oxycarboxin; oxydemeton-methyl; oxydeprofos; oxydisulfoton; oxyfluorfen; oxythioquinox; PAC; palléthrine; PAP; para-dichlorobenzene; parafluron; paraquat; parathion; parathion-methyl; Paris green; PCNB; PCP; p-dichlorobenzene; pebulate; pédinex; pefurazoate; penconazole; pencycuron; pendimethalin; penfluron; penoxsulam; pentachlorophenol; pentanochlor; pentoxazone; perfluidone; permethrin; pethoxamid; PHC; phénétacarbe; phenisopham; phenkapton; phenmedipham; phenmedipham-ethyl; phenobenzuron; phenothiol; phenothrin; phenthoate; phenylmercuriurea; phenylmercury acetate; phenylmercury chloride; phenylmercury nitrate; phenylmercury salicylate; 2-phenylphenol; phorate; phosalone; phosdiphen; phosfolan; phosmet; phosnichlor; phosphamide; phosphamidon; phosphine; phosphocarb; phoxim; phoxim-methyl; phthalide; phthalophos; phthalthrin; picloram; picolinafen; picoxystrobin; piperophos; pirimetaphos; pirimicarb; pirimiphos-ethyl; pirimiphos-methyl; PMA; PMP; polycarbamate; polychlorcamphene; polyethoxyquinoline; polyoxins; polyoxorim; potassium arsenite; potassium cyanate; potassium polysulfide; potassium thiocyanate; pp-DDT (pure); prallethrin; precocene I; precocene II; precocene III; pretilachlor; primidophos; primisulfuron; probenazole; prochloraz; proclonol; procyazine; procymidone; prodiamine; profenofos; profluazol; profluralin; profoxydim; proglinazine; promacyl; promecarb; prometon; prometryn; prometryne; pronamide; propachlor; propafos; propamocarb; propanil; propaphos; propaquizafop; propargite; propazine; propetamphos; propham; propiconazole; propineb; propisochlor; propoxur; propoxycarbazone; propyzamide; prosulfalin; prosulfocarb; prosulfuron; prothidathion; prothiocarb; prothiofos; prothoate; protrifenbute; proxan; prymidophos; prynachlor; pydanon; pyracarbolid; pyraclofos; pyraclonil; pyraclostrobin; pyraflufen; pyrazolate; pyrazolynate; pyrazon; pyrazophos; pyrazosulfuron; pyrazoxyfen; pyresmethrin; pyrethrin I; pyrethrin II; pyrethrins; pyribenzoxim; pyributicarb; pyriclor; pyridaben; pyridafol; pyridaphenthion; pyridate; pyridinitril; pyrifenox; pyriftalid; pyrimétaphos; pyrimethanil; pyrimicarbe; pyrimidifen; pyrimitate; pyriminobac; pyrimiphos-éthyl; pyrimiphos-méthyl; pyriproxyfen; pyrithiobac; pyroquilon; pyroxychlor; pyroxyfur; quassia; quinacetol; quinalphos; quinalphos-methyl; quinazamid; quinclorac; quinconazole; quinmerac; quinoclamine; quinomethionate; quinonamid; quinothion; quinoxyfen; quintiofos; quintozene; quizalofop; quizalofop-P; rabenzazole; rafoxanide; reglone; resmethrin; rhodethanil; rimsulfuron; rodéthanil; ronnel; rotenone; ryania; sabadilla; salicylanilide; schradan; sebuthylazine; secbumeton; selamectin; sesone; sethoxydim; sevin; siduron; silafluofen; silthiofam; silvex; simazine; simeconazole; simeton; simetryn; simetryne; SMA; sodium arsenite; sodium chlorate; sodium fluoride; sodium hexafluorosilicate; sodium orthophenylphenoxide; sodium pentachlorophenate; sodium pentachlorophenoxide; sodium o-phenylphenoxide; sodium polysulfide; sodium silicofluoride; disodium tetraborate; sodium thiocyanate; solan; sophamide; spinosad; spirodiclofen; spiroxamine; stirofos; streptomycin; sulcofuron; sulcotrione; sulfallate; sulfentrazone; sulfiram; sulfluramid; sulfometuron; sulfosulfuron; sulfotep; sulfotepp; sulfur; sulfuric acid; sulfuryl fluoride; sulglycapin; sulprofos; sultropen; swep; 2,4,5-T; tau-fluvalinate; tazimcarb; 2,4,5-TB; 2,3,6-TBA; TBTO; TBZ; TCA; TCBA; TCMTB; TCNB; TDE; tebuconazole; tebufenozide; tebufenpyrad; tebupirimfos; tebutam; tebuthiuron; tecloftalam; tecnazene; tecoram; tedion; teflubenzuron; tefluthrin; temephos; TEPP; tepraloxydim; terallethrin; terbacil; terbucarb; terbuchlor; terbufos; terbumeton; terbuthylazine; terbutol; terbutryn; terbutryne; terraclor; tetrachloroethane; tetrachlorvinphos; tetraconazole; tetradifon; tetradisul; tetrafluron; tetramethrin; tetranactin; tetrasul; thenylchlor; theta-cypermethrin; thiabendazole; thiacloprid; thiadiazine; thiadifluor; thiamethoxam; thiameturon; thiazafluron; thiazone; thiazopyr; thicrofos; thicyofen; thidiazimin; thidiazuron; thifensulfuron; thifluzamide; thiobencarb; thiocarboxime; thiochlorfenphim; thiochlorphenphime; thiocyclam; thiodan; thiodicarb; thiofanocarb; thiofanox; thiomersal; thiometon; thionazin; thiophanate; thiophanate-ethyl; thiophanate-methyl; thiophos; thioquinox; thiosultap; thiram; thiuram; thuringiensin; tiabendazole; tiocarbazil; tioclorim; tioxymid; TMTD; tolclofos-methyl; tolylfluanid; tolfenpyrad; tolylmercury acetate; toxaphene; 2,4,5-TP; 2,3,3-TPA; TPN; tralkoxydim; tralomethrin; d-trans-allethrin; transfluthrin; transpermethrin; tri-allate; triadimefon; triadimenol; triallate; triamiphos; triarathene; triarimol; triasulfuron; triazamate; triazbutil; triaziflam; triazophos; triazothion; triazoxide; tribenuron; tributyltin oxide; tricamba; trichlamide; trichlorfon; trichlormetaphos-3; trichloronat; trichloronate; trichlorphon; triclopyr; tricyclazole; tricyclohexyltin; hydroxide; tridemorph; tridiphane; trietazine; trifenofos; trifloxystrobin; trifloxysulfuron; triflumizole; triflumuron; trifluralin; triflusulfuron; trifop; trifopsime; triforine; trimeturon; triphenyltin; triprene; tripropindan; tritac; triticonazole; tritosulfuron; uniconazole; uniconazole-P; validamycin; vamidothion; vaniliprole; vernolate; vinclozolin; XMC; xylachlor; xylenols; xylylcarb; zarilamid; zeta-cypermethrin; zinc naphthenate; zineb; zolaprofos; zoxamide trichlorophenate; 1,2-dichloropropane; 1,3-dichloropropene; 2-methoxyethylmercury chloride; 2-phenylphenol; 2,3,3-TPA; 2,3,6-TBA; 2,4-D; 2,4-DB; 2,4-DEB; 2,4-DEP; 2,4-DP; 2,4-MCPB; 2,4,5-T; 2,4,5-TB; 2,4,5-TP; 3,4-DA; 3,4-DB; 3,4-DP; 4-CPA; 4-CPB; 4-CPP; 8-hydroxyquinoline sulfate.

Die Pflanzenschutzmittel b) können selbstverständlich auch als Mischung in den üblichen Mischungsverhältnissen vorliegen. Die Menge des Pflanzenschutzmittels b), bezogen auf die Menge der Komponente a) beträgt üblicherweise 1 bis 25Gew.-%, vorzugsweise 3 bis 15 Gew.-%.

Das Pflanzenschutzmittel b) muß nicht fertig gemischt mit den Komponenten a) und gegebenefalls c) vorliegen sondern kann auch vor der Applikation der Komponenten a) und gegebenefalls c) zugemischt werden, zum Beispiel im Rahmen eines sogenannten Tankmix.

Als bevorzugte Pflanzenschutzmittel b) sind bodenwirksame Mittel, wie acetochlor, alachlor, aldicarb, asulam, atrazine, benalaxyl, bendiocarb, benfuracarb, benomyl, benthiocarb, borax, bromacil, butachlor, butam, cadusafos, calcium cyanamide, captafol, captan, carbaryl, carbendazim, carbofuran, carbon disulfide, carbon tetrachloride, carbosulfan, carboxin, CDAA, CDEA, CDEC, CEPC, chlor-IPC, chloramben, chlorbromuron, chlordane, chlorfluazuron, chloridazon, chloropicrin, chlorothalonil, chlorotoluron, chloroxifenidim (= chloroxuron), chlorpropham, copper acetate, copper acetoarsenite, copper arsenate, copper carbonate, basic, copper hydroxide, copper naphthenate, copper oleate, copper oxychloride, copper 8-quinolinolate, copper silicate, copper sulfate, copper sulfate, basic, copper zinc chromate, cyanazine, dalapon, dazomet, decarbofuran, di-allate (= diallate), diazinon, dibrom, 1,2-dibromoethane, dichlobenil, 1,2-dichloroethane, dichloromethane, 1,2-dichloropropane, 1,3-dichloroporpene, dieldrin, diphenamid, dipterex, diuron, endosulfan, endrin, epoxiconazole, EPTC, ethalfluralin, ethylan (= ethyl-DDD), ethylene dibromide, ethylene dichloride, ethylene oxide, ethylmercury bromide, ethylmercury chloride, ethylmercury phosphate, fenuron, ferbam, ferrous sulfate, fluchloralin, folpel (= folpet), formaldehyde, fosthiazate, furmecyclox, gamma-BHC, gamma-cyhalothrin, gamma-HCH, guanoctine (= guazatine), HCH, gamma-HCH, heptachlor, hexachlor, hydrogencyanide, imazalil, imazamox, imazapic, imazapyr, imazaquin, imazethapyr, imazosulfuron, imidacloprid, IPC, iprodione, isonoruron, isoprocarb, isoproturon, isouron, lactofen, lenacil, lime sulfur, lindane, linuron, mancopper, mancozeb, maneb, mercuricchloride, mercuric oxide, mercurous chloride, metalaxyl, metalaxyl-M, metam, metazachlor, methabenzthiazuron, metham, methyl bromide, methylchloroform, isothiocyanate, methyl-mercaptophos, methylmercaptophos, methylmercury benzoate, methylmercury, metiram, metobenzuron, metobromuron, metolachlor, S-metolachlor, metosulam, metoxuron, metribuzin, mirex, molinate, monalide, monolinuron, monuron, MSMA, nabam, naled, naphthalic anhydride, napropamide, naptalam, neburea, neburon, nitralin, norflurazon, noruron, novaluron, ofurace, oryzalin, oxadixyl, oxine-copper, oxine-Cu, oxycarboxin, PCNB, PCP, pebulate, pendimethalin, phenylmercuriurea, phenylmercury acetate, phenylmercury chloride, phenylmercury nitrate, phenylmercury salicylate, phorate, phosphocarb, phthalide, phthalophos, phthalthrin, picloram, pirimicarb, potassium arsenite, potassium cyanate, potassium polysulfide, potassium thiocyanate, prochloraz, procymidone, profluralin, propham, propiconazole, propineb, prosulfalin, pyrazon, quinclorac, sevin, siduron, simazine, sulfur, sulfuric acid, tebuconazole, terbacil, terraclor, thiabendazole, thiacloprid, thiameturon, thiobencarb, thiocarboxime, thiodan, thiodicarb, thiofanocarb, thiophanate, thiophanate-ethyl, thiophanate-methyl, thiram, thiuram, tiabendazole, TMTD, toxaphene, tri-allate, triadimefon, triadimenol, triallate, tribenuron, hydroxide, triflumuron, trifluralin, vernolate, vinclozolin, zineb, 1,2-dichloropropane, 1,3-dichloropropene zu nennen.

Vorzugsweise enthält das erfindungsgemäße Mittel jedoch nur die Komponenten a) und gegebenenfalls c).

Als weitere Bestandteile c) der Mischung M kommen in Frage: Wasser in untergeordneter Menge, beispielsweise 1 bis 6 Gew.-% bezogen auf die Komponente a), Füllstoffe, Wasserenthärtungsmittel sowie die im Agrobereich üblichen Zusatzstoffe in den üblichen Mengen, zum Beispiel Pflanzennährstoffe in den verschiedenen Formen und weiterhin Füllstoffe wie Kaolin Clay, Bentonit, Talkum, Calciumcarbonat; Antibackmittel, wie feinteilige Kieselsäuren; lösliche Salze, wie Natriumchlorid, Natriumsulfat, Ammoniumsulfat; Tenside wie Alkylsulfate, Alkylsulfonate, Alkylpolyglykoside, Alkylethersulfate, Alkylbenzolsulfonate, Alkylbernsteinestersulfonate, Mono/Diphosphorsäurealkylester, Sarkosinate, Taurate, alkoxylierte tierische/pflanzliche Fette und Öle, Glycerinester, alkoxylierte Fettalkohole und Oxoalkohole, alkoxylierte Fettsäuren, Alkylphenolethoxylate, Fettaminalkoxylate, Fettsäureamidalkoxylate, Zuckertenside wie Sorbitanfettsäureester und deren Ethoxylate, Ethylenoxid/Propylenoxid Blockpolymere; Antischaummittel, wie Silicontenside.

Die erfindungsgemäße Mischung M kann praktisch trocken, beispielsweise pur oder als Formulierung oder auch im flüssigen Medium verwendet oder ausgebracht werden.

Als flüssige Medien kommen in Frage: wässrige Salzlösungen, wässrige Nährstofflösungen (zum Beispiel aus Nährsalzen und/oder Harnstoffen), insbesondere Wasser.

In der Regel wird die erfindungsgemäße Mischung M in wässrigem Medium, insbesondere Wasser, in einem Konzentrationsbereich von 0,0001 bis 6 Gew.-%, vorzugsweise 0,001 bis 0,01 Gew.-%, insbesondere 0,0015 bis 0,005Gew.-%, bezogen auf die Gewichtssumme aus erfindungsgemäßer Mischung M und Medium, eingesetzt.

Die erfindungsgemäßen Mischungen M können in unterschiedlicher Formulierungsart in den Handel kommen. Geeignete Formulierungsarten sind flüssige Suspensionskonzentrate, feste wasserdispergierbare Pulver, wasserdispergierbare Graulate und Streugranulate. Bevorzugt sind wasserdispergierbare Granulate.

Die Gesamtaufwandmenge der erfindungsgemäßen Mischungen M ist so zu bemessen, daß eine fungizide, nematizide oder insektizide Wirkung auftritt, welches mit wenigen Vorversuchen ermittelbar ist. Üblicherweise liegt die Gesamtaufwandsmenge im Bereich von 0,5 bis 50 kg/(ha, Kultur, Saison).

Das erfindungsgemäße Verfahren kann auf allen Böden und/oder Substraten (Wachstumsmedien, zum Beispiel Steinwolle) angewendet werden, auf welchen üblicherweise Nutzpflanzen und/oder Zierpflanzen erzeugt werden; bevorzugt sind neutral bis basische Böden und/oder Substrate, auch Vulkanböden. Unter neutralen bis basischen Böden und/oder Substraten sind hierin solche zu verstehen, deren pH-Wert im Bereich von 6.2 bis 9.0, vorzugsweise 7.0 bis 8.2 liegt.

Das erfindungsgemäße Verfahren kann mit allen üblichen Bewässerungsanlagen oder Bewässerungsverfahren durchgeführt werden, die unter anderem in Antinio L. Alarcon, "tecnologia para cultivos de alto rendimiento" Edidato por: NOVEDADES AGRICOLAS S.A. Torre Pacheco (Murcia), 2000 (ISBN: 84-607-1212-5) oder in Yaron, B; Danfors,E und Vaadia,Y.: Arid zone irrigation (1973, Springer Verlag; Kapitel ,Irrigation Technology, S. 303-353 beschrieben sind, beispielsweise Beregnung, Kanalbewässerung, ganzflächige Bewässerung, Pivotbewässerung; bevorzugt sind jedoch solche Bewässerungsanlagen oder Bewässerungsverfahren, welche eine Boden- bzw. Substratbewässerung unter der Blattgrenze der Pflanzen gewährleisten, wie die Tropfbewässerung oder die Mikrosprinklerbewässerung, die bekannt sind.

Ein besonderer Vorzug der erfindungsgemäßen Mischung M ist, daß sie sich beispielsweise in Wasser sehr gut dispergieren (suspendieren) läßt, das heißt, daß sich die erfindungsgemäße Mischung in überschaubaren Zeiträumen nicht in der wässrigen Dispersion (Suspension) absetzt und/oder, beispielsweise auf der Oberfläche separiert ("ausrahmt"). Ein gutes Maß für diese Dispergierbarkeit (Suspendierbarkeit) ist die sogenannte Schwebefähigkeit nach CIPAC MT 168 (CIPAC Handbook F - Page 427 - Determination of Suspension Stability of Waterdispersible Granules). Üblicherweise liegt die Schwebefähigkeit der wässrigen Dispersionen (Suspensionen) welche die erfindungsgemäße Mischung M enthalten bei 50 bis 100%, vorzugsweise bei 70 bis 100%.

Als Nutzpflanzen kommen in Frage Ackerkulturen, wie Baumwolle oder Getreide, vorzugsweise aber Obst- und Gemüsekulturen, vorzugsweise Dauerkulturen. Als Zierpflanzen kommen in Frage Topfpflanzen und Schnittblumen, vorzugsweise mehrjährige Kulturen, wie Rosen. Beispiele für Obst- und Gemüsekulturen sind: Tomaten, Paprika, Gurken, Zitrusfrüchte, Bananen, Pfirsiche, Tafeltrauben, Äpfel, Birnen, Oliven, Mangos, Papayas, Avocados, Erdbeeren oder Kiwi.

Das vorliegende Verfahren zeichnet sich insbesondere dadurch aus, daß eine wirksame Entseuchung des Bodens erreicht wird, ohne daß toxikologische oder ökoogische, unerwünschte Nebenwirkungen auftreten. Die erfindungsgemäße Mischung M läßt sich sehr gut in Bewässerungssystemen, vor allem zur Tropfbewässerung einsetzen. Unter anderem dadurch, daß die erfindungsgemäße, feinstpartikuläre Mischung M in dem wässrigen Medium sehr gut dispergiert/suspendiert ist, ist dieses Medium sehr gut pumpbar und führt nicht zur Verstopfung des Bewässerungspipelinesystems oder dessen Düsen oder Ventilen, wie dies beispielsweise bei grobkörnigen, suspendierten Feststoffen vorkommt.

Beispiel:
In einem 2,5 m³ Rührbehälter werden kontinuierlich 730 1/h einer 53 % wässrigen Kaliumligninsulfonatlösung und 1000 1/h flüssiger Schwefel unter Rühren gemischt und mit einer Zahnkranzemulgiermaschine (5 Herz) weiter zerkleinert. Anschließend wird die Mischung einer Sprühtrocknung zugeführt. Die feste Mischung wird mit 0,3 % Antibackmittel vermischt. Das braune Produkt enthält 75 Gew.-% Schwefel, 21,5 Gew.-% Kaliumligninsulfonat, 0,3 Gew.-% Antibackmittel und 3,2 Gew.-% Restwasser.

Die Dispergierfähigkeit beträgt 93 %, die 1 % Schwebefähigkeit beträgt 87 %. Nasse Siebanalyse: 0,05 % > 75 µm. PH-Wert 1 %: 8,5. Primärteilchengröße 50 %: 3 µm, lose Schüttdichte 0,845, Staubzahl 5.

## Patentansprüche

1. Verfahren zur chemischen Bodenentseuchung durch Applikation einer fungizid, insektizid oder nematizid wirksamen Menge einer Mischung M, enthaltend eine Komponente a) aus
a1) 20 bis 96 Gew.-% Schwefel,
a2) 4 bis 80 Gew.-% mindestens eines Komplexbildners, ausgewählt aus der Gruppe bestehend aus:
Ligninsulfonate, Naphthalinsulfonsäure-Formaldehydkondensate, Polyacrylsäure und ihre Salze, Polymethacrylsäure und ihre salze, Polymaleinsäure und deren Salze, Copolymere aus Acrylsäure und Maleinsäure, Polyacrylate, Polyaspartate und andere Polyaminosäuren,
und gegebenenfalls ein oder mehrere Pflanzenschutzmittel b) und/oder weitere Zusatzstoffe c).

2. Verfahren nach Anspruch 1, **dadurch gekennzeichnet, daß** der polymere Komplexbildner a2) ein Ligninsulfonat, ein Naphthalinsulfonsäure-Formaldehydkondensat oder eine Mischung aus Ligninsulfonat und Naphthalinsulfonsäure-Formaldehydkondensat ist.

3. Verfahren nach den Ansprüchen 1 bis 2, **dadurch gekennzeichnet, daß** der polymere Komplexbildner a2) ein Alkalimetall- und/oder Erdalkalimetallligninsulfonat ist.

4. Verfahren nach den Ansprüchen 1 bis 3, **dadurch gekennzeichnet, daß** die Mischung M rieselfähig ist, mit einer mittleren Teilchengröße von 50 µm bis 4 mm.

5. Verfahren nach den Ansprüchen 1 bis 4, **dadurch gekennzeichnet, daß** die Applikation mit einer Tropfbewässerungsvorrichtung durchgeführt wird.

## Claims

1. A chemical soil disinfestation method in which a fungicidally, insecticidally or nematicidally active amount of a mixture M comprising a component a) of
a1) 20 to 96% by weight of sulfur,
a2) 4 to 80% by weight of at least one complexing agent selected from the group consisting of:
lignosulfonates, naphthalenesulfonic acid/formaldehyde condensates, polyacrylic acid and its salts, polymethacrylic acid and its salts, polymaleic acid and its salts, copolymers of acrylic acid and maleic acid, polyacrylates, polyaspartates and other polyamino acids,
and, if appropriate, one or more crop protection agents b) and/or further additives c) is applied.

2. The method according to claim 1, wherein the polymeric complexing agent a2) is a lignosulfonate, a naphthalenesulfonic acid/formaldehyde condensate or a mixture of lignosulfonate and naphthalenesulfonic acid/formaldehyde condensate.

3. The method according to either of claims 1 to 2, wherein the polymeric complexing agent a2) is an alkali metal lignosulfonate and/or an alkaline earth metal lignosulfonate.

4. The method according to any of claims 1 to 3, wherein the mixture M is flowable and has a mean particle size of from 50 µm to 4 mm.

5. The method according to any of claims 1 to 4, wherein the application is carried out using a trickle irrigation system.

## Revendications

1. Procédé pour la désinfection chimique de sols par application d'une quantité à activité fongicide, insecticide ou nématicide d'un mélange M contenant un composant a) constitué
a1) de 20 à 96 % en poids de soufre,
a2) de 4 à 80 % en poids d'au moins un complexant, choisi dans le groupe constitué par :
des ligninesulfonates, des produits de condensation d'acide naphtalènesulfonique-formaldéhyde, le poly(acide acrylique) et ses sels, le poly(acide méthacrylique) et ses sels, le poly(acide maléique) et ses sels, des copolymères d'acide acrylique et acide maléique, des polyacrylates, des polyaspartates et d'autres poly(acide aminé)s,
et éventuellement d'un ou plusieurs agents phytosanitaires b) et/ou d'autres additifs c).

2. Procédé selon la revendication 1, **caractérisé en ce que** le complexant polymère a2) est un ligninesulfonate, un produit de condensation d'acide naphtalènesulfonique-formaldéhyde ou un mélange de ligninesulfonate et de produit de condensation d'acide naphtalènesulfonique-formaldéhyde.

3. Procédé selon les revendications 1 et 2, **caractérisé en ce que** le complexant polymère a2) est un ligninesulfonate de métal alcalin et/ou de métal alcalino-terreux.

4. Procédé selon les revendications 1 à 3, **caractérisé en ce que** le mélange M est apte à l'écoulement, avec une taille moyenne de particule de 50 µm à 4 mm.

5. Procédé selon les revendications 1 à 4, **caractérisé en ce que** l'application est effectuée à l'aide d'un dispositif d'arrosage goutte à goutte.
